# EUROPÄISCHE PATENTSCHRIFT

(11) **EP 2 512 890 B1**
(45) Veröffentlichungstag und Bekanntmachung des Hinweises auf die Patenterteilung: **11.01.2017**
(21) Anmeldenummer: 10784970.5
(22) Anmeldetag: 11.11.2010
(51) Int. Cl.: B60T 17/22, B60Q 1/44, B60Q 1/30

(54) **VERFAHREN ZUM SIGNALISIEREN EINES BREMSVORGANGS AN EINEM ANHÄNGEFAHRZEUG, STEUEREINRICHTUNG HIERFÜR, SOWIE LICHTANLAGE, ANHÄNGEFAHRZEUGBREMSANLAGE UND ANHÄNGEFAHRZEUG MIT DIESER STEUEREINRICHTUNG**
METHOD FOR SIGNALLING A BRAKE PROCESS AT A TRAILER VEHICLE, CONTROL DEVICE FOR THIS PURPOSE, AND LIGHTING SYSTEM, TRAILER VEHICLE BRAKE SYSTEM AND TRAILER VEHICLE WITH SAID CONTROL DEVICE
PROCÉDÉ POUR SIGNALER SUR UNE REMORQUE UNE OPÉRATION DE FREINAGE, DISPOSITIF DE COMMANDE À CET EFFET, AINSI QUE DISPOSITIF LUMINEUX, DISPOSITIF DE FREIN DE REMORQUE, ET REMORQUE COMPORTANT CE DISPOSITIF DE COMMANDE

(30) Priorität: 18.12.2009 DE 102009058814; 19.08.2010 DE 102010034745
(43) Veröffentlichungstag der Anmeldung: 24.10.2012
(73) Patentinhaber: WABCO GmbH, 30453 Hannover (DE)
(72) Erfinder: BARLSEN, Holger, 30851 Langenhagen (DE); LANGE, Tobias, 50126 Bergheim (DE); RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2010/006869
(87) Internationale Veröffentlichungsnummer: WO 2011/072780

(56) Entgegenhaltungen:
- US-A1- 2007 241 874

## Beschreibung

Die Erfindung betrifft ein Verfahren zum Signalisieren eines Bremsvorgangs an einem Anhängefahrzeug. Ferner betrifft die Erfindung eine Steuereinrichtung für das Anhängefahrzeug, mittels der das Verfahren durchgeführt bzw. gesteuert werden kann. Weiter betrifft die Erfindung eine Lichtanlage mit dieser Steuereinrichtung, eine Anhängefahrzeugbremsanlage mit dieser Steuereinrichtung und schließlich ein Anhängefahrzeug, welches diese Steuereinrichtung und/oder diese Lichtanlage und/oder diese Bremsanlage und/oder Einrichtungen aufweist, mittels denen das erfindungsgemäße Verfahren durchgeführt werden kann.

Die Erfindung ist insbesondere für Anhängefahrzeuge vorgesehen, die mittels eines elektronischen Bremssystems (EBS) elektronisch gesteuert oder geregelt abgebremst werden können. Elektronische Bremssysteme werden zumeist bei Fahrzeugen, insbesondere Nutzfahrzeugen, wie Lastkraftwagen, eingesetzt und haben unter anderem die Aufgabe, Bremszylinder oder andere Zuspanneinrichtungen einer Betriebs-Bremsanlage des Fahrzeugs bei Betätigung eines Bremspedals an allen Achsen des Fahrzeugs so zu steuern, dass Bremsen, denen die Bremszylinder zugeordnet sind, gleichzeitig und gleichmäßig ansprechen. Mit elektronischen Bremssystemen kann ein Bremsweg des Fahrzeugs verkürzt und zudem ein gleichmäßiger Verschleiß von Bremsbelegen erreicht werden. Das elektronische Bremssystem steuert dabei die pneumatisch arbeitenden Bremszylinder bzw. Betriebs-Bremseinrichtungen elektronisch an. Strömungszeiten für einen Druckaufbau bzw. Druckabbau werden reduziert und dabei Reaktionszeiten des Bremssystems verkürzt.

Bekannte elektronisch geregelte Bremssysteme, vergleiche Bosch, Kraftfahrtechnisches Taschenbuch, 26. Auflage, S. 904, umfassen eine Steuereinrichtung und mit der Steuereinrichtung signalübertragend verbundene Druckregelmodule, denen Bremseinrichtungen des Fahrzeugs zugeordnet sind. Dabei können ein einzelnes Steuergerät oder dezentral mehrere Steuergeräte angeordnet sein. Liegt dem Steuergerät ein Eingangssignal über einen Bremswunsch vor, so werden in den Druckregelmodulen die pneumatischen Steuerdrücke abgesperrt, welche an einer einen Redundanzdruck führenden Steuerdruckleitung anliegen. Das elektronische Steuergerät ermittelt abhängig von einem Verzögerungswunsch und weiteren Fahrzeugparametern einen Bremssolldruck. Dieser Bremssolldruck wird an die Druckregelmodule übertragen. Die Druckregelmodule steuern den Bremssolldruck achs- oder radweise in die Bremszylinder ein.

Für Anhängefahrzeuge sind Anhängersteuermodule bekannt, vgl. Bosch, Kraftfahrtechnisches Taschenbuch, 26. Auflage, S. 906, welche die Regelung des Anhängersteuerdrucks entsprechend den funktionalen Anforderungen des elektronischen Bremssystems ermöglichen. Ein Verfahren zum Betrieb einer elektronisch gesteuerten Druckmittelbremsanlage ist bspw. aus DE 101 56 673 A1 bekannt.

Ferner weisen sowohl bekannte Zugfahrzeuge als auch bekannte Anhängefahrzeuge Lichtanlagen auf, mittels denen ein Bremsvorgang signalisiert werden kann. Bremsleuchten der Lichtanlage des Anhängefahrzeugs werden dabei wie Bremsleuchten des Zugfahrzeugs angesteuert. Eine hierzu erforderliche elektrische Verbindung erfolgt über eine genormte und in soweit verbindliche Steckverbindung nach ISO 12098 zwischen dem Zugfahrzeug und dem Anhängefahrzeug.

Das Dokument US2007/0241874 A1 offenbart eine Bremslichtkontrolleinrichtung, die erweiterte Warnsignale mit Hilfe von abgestuften Lichtintensitäten zur Verfügung stellt.

Um einen dem Fahrzeug nachfolgenden Verkehr über die Stärke einer Bremsung zu informieren, ist für Zugfahrzeuge ein adaptives Bremslicht bzw. die Aussteuerung einer Notbremsleuchte bekannt. Dabei führt das Steuergerät der elektronisch geregelten Bremsanlage im Zugfahrzeug eine Notbremsauswertung durch, wobei zur Verfügung stehende Fahrzeugparameter ausgewertet werden und in Erwiderung darauf entschieden wird, ob eine Notbremssituation vorliegt. Dadurch wird ausgeschlossen, dass Gefahrensituationen für den nachfolgenden Autoverkehr durch eine fälschliche Notbremsanzeige des Zugfahrzeugs entstehen. Wenn eine Notbremssituation erkannt wird, wird diese über das adaptive Bremslicht bzw. die Notbremsleuchte des Zugfahrzeugs angezeigt und der nachfolgende Verkehr entsprechend über die Stärke der Bremsung informiert bzw. gewarnt.

Wenn jedoch das Zugfahrzeug ein Anhängefahrzeug, insbesondere einen Sattelauflieger oder Deichselanhänger, zieht, so ist die Notbremsleuchte am Zugfahrzeug zur Notbremsanzeige für den nachfolgenden Verkehr nicht erkennbar, da sie vom Anhängefahrzeug abgedeckt ist. Bei Notbremssituationen von Fahrzeugzügen, die das Zugfahrzeug und wenigstens ein Anhängefahrzeug aufweisen, kann es daher zu gefährlichen Verkehrssituationen kommen, auch wenn das Zugfahrzeug mit einem adaptiven Bremslicht ausgerüstet ist. Eine Kopplung einer Bremsleuchte am Anhängefahrzeug an das adaptive Bremslicht bzw. die Notbremsleuchte des Zugfahrzeugs ist nicht möglich, da die o.g Steckverbindung nach ISO 12098 zwischen dem Zugfahrzeug und dem Anhängefahrzeug die erforderliche Verbindungsmöglichkeit nicht leistet.

Aus DE 10 2007 054 189 A1 ist ein Bremssteuermodul für ein Anhängefahrzeug bekannt, das Warnlampen bzw. Bremsleuchten eines dieses Bremssteuermodul aufweisenden Anhängefahrzeugs ansteuert. Hierfür wird das Bremssteuermodul vom Zugfahrzeug über eine hierfür vorgesehene Zugfahrzeug-Warnlampen-Schnittstelle angesteuert. Nachteilig an dieser Ansteuerung ist, dass somit spezielle Schnittstellen sowohl am Zugfahrzeug als auch am Anhängefahrzeug vorgesehen werden müssen, die nicht der Norm entsprechen. Somit können Anhängefahrzeuge, die ein Bremssteuermodul gemäß DE 10 2007 054 189 A1 aufweisen, nicht an Zugfahrzeuge mit genormten Schnittstellen angekoppelt und betrieben werden. Darüber hinaus werden von diesem bekannten Bremssteuermodul zwar die Bremsleuchten des Anhängefahrzeugs angesteuert. Eine zusätzliche Ansteuerung eines adaptiven Bremslichts bzw. einer Notbremsleuchte von diesem Bremssteuermodul ist jedoch nicht vorgesehen bzw. scheint nicht ohne nochmalige Erweiterung der Schnittstellen zwischen dem Zugfahrzeug und dem Anhängefahrzeug möglich. Der nachfolgende Verkehr wird somit ebenfalls nicht über eine Notbremsung informiert.

Der Erfindung liegt daher das Problem zugrunde, die Sicherheit im Straßenverkehr beim Betrieb eines Anhängefahrzeugs, insbesondere mit elektronischem Bremssystems, zu verbessern.

Die Erfindung löst dieses Problem mit einem Verfahren nach Anspruch1, mit einer Steuereinrichtung nach Anspruch 6, mit einer Lichtanlage nach Anspruch 11, mit einer Anhängefahrzeugbremsanlage nach Anspruch 13 und mit einem Anhängefahrzeug nach Anspruch 14.

Insbesondere löst die Erfindung das Problem dadurch, dass am Anhängefahrzeug verfügbare Daten und/oder Signale von einer ebenfalls am Anhängefahrzeug angeordneten Steuereinrichtung ausgewertet werden, die einen Rückschluss auf einen Bremsvorgang, insbesondere eine Stärke und/oder andere charakteristische Merkmale des Bremsvorgangs wie einen automatischen Bremseingriff, zulassen.

Die Steuereinrichtung ist vorzugsweise zugleich eine Steuerzentrale eines elektronischen Bremssystems am Anhängefahrzeug und steuert zusätzlich zur Bremsleuchte bzw. zur Notbremssignalisierung auch dieses elektronische Bremssystems am Anhängefahrzeug. Somit sind Steuerfunktionen für die Bremsleuchte bzw. für die Notbremssignalisierung in die ohnehin vorhandene Steuerzentrale des elektronischen Bremssystems am Anhängefahrzeug integriert. Dies ist insbesondere deshalb vorteilhaft, weil in dieser Steuerzentrale die Signale und/oder Daten vorliegen, die vorteilhaft für Steuer- und/oder Regelfunktionen des elektronischen Bremssystems herausgezogen werden. Diese Signale bzw. Daten können zumindest teilweise ggf. nebst weiterer Eingangsgrößen zum Erkennen besonderer Bremssituationen, insbesondere einer Notbremsung, für die Ansteuerung der Bremsleuchte bzw. Notbremssignalisierung genutzt werden.

In Erwiderung auf den Bremsvorgang, insbesondere im Falle einer erkannten Notbremsung und/oder im Falle eines erkannten automatischen Bremseingriffs, steuert die Steuereinrichtung wenigstens eine vorhandene oder zusätzliche Bremsleuchte des Anhängefahrzeugs derart an, dass der nachfolgende Verkehr vom Leuchten der Bremsleuchten Rückschlüsse auf den Bremsvorgang, insbesondere auf die Stärke oder andere Merkmale des Bremsvorgangs, ziehen kann und bspw. eine Notbremsung als solche erkennt.

Die Ansteuerung der Bremsleuchten erfolgt somit nicht vom Zugfahrzeug und nicht über vom Zugfahrzeug eingehende Steuerbefehle. Vielmehr entscheidet die Steuereinrichtung am Anhängefahrzeug selbsttätig, ob bspw. eine Notbremsung vorliegt und steuert die Bremsleuchten entsprechend an, so dass der nachfolgende Verkehr gewarnt wird. Hierfür müssen keine zusätzlichen Schnittstellen zwischen dem Zugfahrzeug und dem Anhängefahrzeug vorgesehen werden. Das erfindungsgemäße Verfahren kann somit bei erfindungsgemäß ausgerüsteten Anhängefahrzeugen in Verbindung mit jedem Zugfahrzeug durchgeführt werden, das eine normgerechte Schnittstelle und insbesondere ein elektronisches Bremssystem aufweist und zum Ziehen eines Anhängefahrzeugs, das mit einem elektronischen Bremssystem betrieben werden kann, ausgerüstet ist.

Im Einzelnen ermittelt gemäß dem erfindungsgemäßen Verfahren die am Anhängefahrzeug angeordnete Steuereinrichtung wenigstens einen Abbremsungswert, der dem Bremsvorgang zugeordnet ist, insbesondere eine Stärke des Bremsvorgangs oder andere den Bremsvorgang kennzeichnende bzw. charakterisierende Merkmale repräsentiert. Hierfür weist die Steuereinrichtung Abbremsungswertermittlungsmittel auf. Ferner weist die Steuereinrichtung Bremsleuchtenansteuerungsmittel auf, die zum Ermitteln des Abbremsungswertes Signale oder Daten berücksichtigen, welche von dem elektronischen Bremssystem für Steuer- und/oder Regelfunktionen genutzt werden. Die Steuereinrichtung und insbesondere die Bremsleuchtenansteuerungsmittel steuern wenigstens eine Bremsleuchte der Lichtanlage in Abhängigkeit von diesem Abbremsungswert derart an, dass der Bremsvorgang in Abhängigkeit von diesem Abbremsungswert am Anhängefahrzeug unterschiedlich gegenüber einer Signalisierung im Falle wenigstens eines anderen von dieser Steuereinrichtung bei einem Bremsvorgang ermittelbaren Abbremsungswertes signalisiert wird. Eine den jeweiligen Bremsvorgang zugeordnete Stärke dieses Bremsvorgangs bzw. der Abbremsungswert kann dabei eine gewählte oder ermittelte Verzögerung des Anhängefahrzeugs oder eines das Anhängefahrzeug ziehenden Zugfahrzeugs oder eines das Anhängerfahrzeug und das Zugfahrzeug aufweisenden Fahrzeugzugs sein. Die Steuereinrichtung weist vorzugsweise einen Notbremssignalausgang auf, über den die Lichtanlage ansteuerbar ist.

Vorzugsweise weist die Steuereinrichtung Empfangsmittel auf, mittels denen sie von einem das Anhängefahrzeug ziehenden Zugfahrzeug über einen Datenbus, insbesondere Controller Area Network (CAN)-Datenbus, an dieses Anhängefahrzeug übertragene Daten und/oder Signale empfängt. Diese Daten bzw. Signale verwendet die Steuereinrichtung zum Ermitteln des Abbremsungswerts. Alternativ oder zusätzlich verwendet die Steuereinrichtung zum Ermitteln des Abbremsungswerts Signale und/oder Daten, die von Einrichtungen am Anhängefahrzeug, bspw. von Sensoren, empfangen werden.

Vorzugsweise steuert die Steuereinrichtung die Bremsleuchte über einen Datenbus an. Hierfür sind die Bremsleuchtenansteuerungsmittel entsprechend ausgebildet. Die Steuereinrichtung ist somit über einen Datenbus mit einer Einrichtung einer Lichtanlage des Anhängefahrzeugs verbunden, welche wiederum die Bremsleuchten ansteuert.

Vorzugsweise schaltet die Steuereinrichtung bzw. schalten die Bremsleuchtenansteuerungsmittel eine Ausgangsendstufe, welche die Bremsleuchte ansteuert. Eine Ansteuerung kann dabei direkt oder indirekt, bspw. über ein Relais, erfolgen. Nach Ansteuerung der Ausgangsendstufe, bspw. über den o.g. Datenbus, können somit von der Ausgangsendstufe die Ströme bereitgestellt werden, die zur Ansteuerung der Bremsleuchte benötigt werden. Die Steuereinrichtung kann deshalb für vergleichsweise geringere Ströme ausgelegt werden.

Vorzugsweise sind die Bremsleuchtenansteuerungsmittel derart ausgebildet, dass die Steuereinrichtung die Bremsleuchte, insbesondere eine Notbremsleuchte, über eine Lichtverkabelung ansteuert, über welche diese Bremsleuchte auch vom Zugfahrzeug angesteuert wird. Somit ist eine Lichtverkabelung zur Ansteuerung der Bremsleuchte bzw. einer Notbremsleuchte in die bestehende Lichtverkabelung am Anhängefahrzeug integriert. Dies spart Kosten, da keine, insbesondere vollständige, zusätzliche Lichtverkabelung für die Erfindung vorgesehen werden muss.

Vorzugsweise ist die Steuereinrichtung derart ausgebildet, dass sie eine oder mehrere Größen, insbesondere Daten und/oder Signale, zum Ermitteln des Abbremsungswerts heranzieht, die am Zugfahrzeug oder am Anhängefahrzeug für das Zugfahrzeug, für das Anhängerfahrzeug oder für einen das Zugfahrzeug und das Anhängefahrzeug aufweisenden Fahrzeugzug ermittelt werden.

Die Erfindung zieht dabei vorzugsweise als eine derartige Größe wenigstens eine Ist-Geschwindigkeit, besonders bevorzugt wenigstens zwei Ist-Geschwindigkeiten, heran. Alternativ oder zusätzlich zieht die Erfindung als eine Größe wenigstens eine Ist-Verzögerung heran. Sowohl die Ist-Geschwindigkeit als auch die Ist-Verzögerung kann eine geschätzte oder gemessene Größe sein. Bspw. messen Radsensoren Ist-Geschwindigkeiten an Rädern des Anhängefahrzeugs und Ermitteln durch Vergleich von zu verschiedenen Zeitpunkten ermittelten Ist-Geschwindigkeiten eine Geschwindigkeitsabnahme oder es werden Ist-Geschwindigkeiten an verschiedenen Rädern miteinander verglichen und dabei gefährliche Fahrsituationen, die einen automatischen Bremseingriff erfordern, ermittelt. In derartigen Situationen kann es sinnvoll sein, ein Notbremssignal auszugeben.

Weitere derartige Größen, die alternativ oder zusätzlich zum Ermitteln des Abbremsungswertes herangezogen werden, sind wenigstens eine Soll-Verzögerung und/oder wenigstens ein Bremsanforderungssignal. Eine dieser beiden Größen wird bevorzugt vom Zugfahrzeug an das Anhängefahrzeug übermittelt. Die Soll-Verzögerung kann eine unter Heranziehung des Bremsanforderungssignals errechnete bzw. ermittelte Größe sein.

Alternativ oder zusätzlich ist eine Größe, die zum Ermitteln des Abbremsungswertes herangezogen wird, eine Information über einen automatischen Bremseingriff, insbesondere durch das Anhängefahrzeug. Diese Information kann bspw. eine Bemessungsgröße sein, die den Bremseingriff bewirkt. Alternativ kann die Information auch eine Größe sein, die in Erwiderung auf einen automatischen Bremseingriff bzw. indirekt durch den automatischen Bremseingriff beeinflusst wird. Zum Ermitteln des Abbremsungswerts herangezogenen Größen können aus Eingriffen durch Funktionen der Steuereinrichtung gewonnen werden, wie bspw. Funktionen eines Antiblockiersystems (ABS), einer Antriebsschlupfregelung oder eines elektronischen Stabilitätsprogramms (ESP).

Vorzugsweise werden alternativ oder zusätzlich Informationen über eine sog. RSS-Bremsung, d.h. einer Bremsung unter Einsatz eines Roll Stability Support (RSS)-Systems bzw. eines Systems, das einem seitlichen Kippen entgegenwirkt, zum Ermitteln des Abbremsungswerts herangezogen, wobei im Falle einer erkannten RSS-Bremsung, insbesondere am Anhängefahrzeug, oder im Falle eines anderen automatischen Bremseingriffs eine Notbremsung signalisiert bzw. der Bremsvorgang gegenüber einer Bremsung ohne RSS-Einsatz bzw. automatischen Bremseingriff unterschiedlich signalisiert wird. Insbesondere signalisiert die Bremsleuchte bzw. Notbremsleuchte in Erwiderung auf den automatischen Bremseingriff am Anhängefahrzeug durch das RSS-System eine Notbremsung bzw. Gefahrensituation. In Erwiderung auf den automatischen Bremseingriff wird nämlich ein Abbremsungswert ermittelt, der wiederum eine Ansteuerung der Bremsleuchte zum Signalisieren der Notbremsung bewirkt.

Informationen, die zur Ermittlung des Abbremsungswerts herangezogen werden können ferner Fahrzeugdaten wie Raddrehgeschwindigkeiten, Beladungszustandsinformationen und Sensordaten einer sensierten Querbeschleunigung sein. Die Beladungszustandsinformationen können bspw. mittels eines Lastsensors oder durch Bremsvorgänge ermittelt oder manuell eingegeben werden. Alle diese Informationen können alleine oder zusammen auch ohne RSS-Einsatz zum Ermitteln des Abbremsungswerts herangezogen werden. Insbesondere zieht die Erfindung alternativ oder zusätzlich direkt wenigstens eine am Anhängefahrzeug, am Zugfahrzeug oder am Fahrzeugzug sensierte Größe bzw. Sensorsignale oder Sensordaten, bspw. einer sensierten Querbeschleunigung, als Größen zur Bestimmung des Abbremsungswerts bzw. mehrerer Abbremsungswerte heran.

Vorzugsweise steuert die Steuereinrichtung die Bremsleuchte adaptiv gemäß dem jeweiligen Abbremsungswert an. Insbesondere eine zusätzliche Notbremsleuchte der Lichtanlage am Anhängefahrzeug, alternativ jedoch auch eine bei einer regulären Bremsung verwendete Bremsleuchte, wird von der Steuereinrichtung adaptiv angesteuert. Dadurch wird der nachfolgende Verkehr zumindest darüber informiert, dass eine Notbremsung vorliegt. Ggf. wird der nachfolgende Verkehr zudem über die Stärke der Notbremsung informiert. Bspw. kann die Bremsleuchte mit einer Frequenz in Abhängigkeit vom jeweiligen Abbremsungswert abwechselnd leuchten und wieder nicht leuchten bzw. mit einer anderen Leuchtstärke leuchten.

Vorzugsweise weist die Steuereinrichtung Notbremserkennungsmittel auf, mittels denen sie einen Abbremsungswert mit einem Grenzwert vergleicht. Der Grenzwert kann ein vorbestimmter oder ein bestimmbarer bzw. einstellbarer Grenzwert sein. Die Steuereinrichtung weist vorzugsweise einen Speicher auf, in dem der Grenzwert oder mehrere Grenzwerte abgelegt sind. In Erwiderung auf ein festgestelltes Erreichen, Überschreiten oder Unterschreiten des Grenzwerts erkennt die Steuereinrichtung bzw. erkennen die Notbremserkennungsmittel der Steuereinrichtung den jeweiligen Bremsvorgang als Notbremsung. In Erwiderung auf eine erkannte Notbremsung wird ein Notbremssignal generiert und über einen Notbremssignalausgang, insbesondere einer der Bremsleuchte vorgeschalteten Ausgangsendstufe, bereitgestellt. Ein als Notbremsung erkannter Bremsvorgang wird, insbesondere durch Ansteuerung der Notbremsleuchte bzw. durch die Notbremssignalisierung, anders signalisiert als ein Bremsvorgang, der nicht als Notbremsung erkannt wird. Ggf. wird dieser als Notbremsung erkannte Bremsvorgang auch anders signalisiert als ein anderer ebenfalls als Notbremsung erkannter Bremsvorgang, bei dem jedoch ein anderer Abbremsungswert ermittelt und ein anderer Grenzwert nicht erreicht, erreicht oder überschritten wurde.

Vorzugsweise sind die Bremsleuchtenansteuerungsmittel derart ausgebildet, dass der Bremsvorgang gegenüber einem anderen bei einem Bremsvorgang ermittelbaren Abbremsungswert durch eine oder mehrere der folgenden Funktionen signalisiert wird, insbesondere dann, wenn der Bremsvorgang als Notbremsung erkannt wird.

Eine derartige Funktion ist vorzugsweise ein helleres Leuchten der Bremsleuchte, wobei die Bremsleuchte eine reguläre Bremsleuchte sein kann, mittels der auch eine vergleichsweise schwächere Bremsung signalisierbar ist. Vorzugsweise wird der Bremsvorgang alternativ oder zusätzlich durch Ansteuern und Leuchten wenigstens einer zusätzlichen Bremsleuchte, insbesondere Notbremsleuchte, signalisiert. Diese Bremsleuchte kann ggf. je nach dem ermittelten Abbremsungswert auch unterschiedlich hell leuchten. Die Notbremsleuchte ist bspw. für die Abgabe eines adaptiven Bremslichts ausgebildet.

In einer vorteilhaften Ausführungsform wird alternativ oder zusätzlich der Bremsvorgang durch zyklisches Leuchten der Bremsleuchte bzw. Notbremsleuchte signalisiert. Hierfür wird die Bremsleuchte vorzugsweise derart angesteuert, dass diese Bremsleuchte selbsttätig ein Leuchtmittel, wie wenigstens eine Glühleuchte und/oder LED, alternierend ein- und ausschaltet bzw. im Wechsel bestromt und eine elektrische Leitung unterbricht. Hierfür weist die Bremsleuchte geeignete Schaltmittel, wie bspw. ein Relais und/oder eine elektronische Schaltung, auf.

In einer weiteren vorteilhaften Ausführungsform wird alternativ oder zusätzlich der Bremsvorgang durch zyklisches Ansteuern der vorhandenen und/oder zusätzlichen Bremsleuchte bzw. Notbremsleuchte signalisiert. Das zyklische Ansteuern erfolgt dabei mit fester oder veränderbarer Frequenz, wobei die Frequenz manuell oder automatisch einstellbar sein kann. Bspw. kann die Frequenz automatisch in Abhängigkeit vom ermittelten Abbremsungswert eingestellt werden.

Vorzugsweise schaltet die Steuereinrichtung ein Relais, mittels dem ein Ansteuern der Bremsleuchte durch das Zugfahrzeug für eine endliche Zeitdauer permanent oder zyklisch unterbrochen oder auf eine andere Aussteuerung umgeschaltet werden kann. So wird bspw. eine Bremsleuchte während einer Notbremsung nicht vom Zugfahrzeug sondern von der Steuereinrichtung angesteuert, um diese Bremsleuchte heller leuchten zu lassen. Im Falle des zyklischen Unterbrechens der Ansteuerung durch das Zugfahrzeug kann die Bremsleuchte bspw. während dieser Unterbrechungen nicht leuchten oder von der Steuereinrichtung des Anhängefahrzeugs anders bzw. so angesteuert werden, dass sie während dieser Unterbrechungen heller oder dunkler als regulär leuchtet.

Vorteilhafterweise weist die Steuereinrichtung Mittel, z.B. Hard- und/oder Softwarekomponenten, zur Durchführung von Verfahrensschritten des erfindungsgemäßen Verfahrens zum Signalisieren eines Bremsvorgangs auf.

Die erfindungsgemäße Lichtanlage ist zum Signalisieren eines Bremsvorgangs an einem diese Lichtanlage aufweisenden Anhängefahrzeug vorgesehen. Die Lichtanlage weist wenigstens eine Bremsleuchte und eine erfindungsgemäße Steuereinrichtung auf, mittels der diese Bremsleuchte ansteuerbar ist.

Vorzugsweise weist die Lichtanlage einen Datenbus auf, mittels dem Signale und/oder Daten von einem das Anhängefahrzeug ziehenden Zugfahrzeug an dieses Anhängefahrzeug übertragen werden können.

Vorzugsweise weist die Lichtanlage ferner eine Ausgangsendstufe auf, mittels der die Bremsleuchte direkt oder indirekt angesteuert werden kann.

Vorzugsweise weist die Lichtanlage ferner eine Lichtverkabelung auf, über welche die Bremsleuchte sowohl vom Zugfahrzeug als auch von der Steuereinrichtung aus angesteuert werden kann.

Die erfindungsgemäße Anhängefahrzeugbremsanlage weist ein elektronisches Bremssystem (EBS) und eine erfindungsgemäße Steuereinrichtung auf. Ferner weist die Anhängefahrzeugbremsanlage wenigstens ein signalübertragend mit der Steuereinrichtung verbundenes Bremsbetätigungssteuermodul auf. Das Bremsbetätigungssteuermodul ist bspw. eine Ventileinrichtung bzw. ein Modulator, mittels dem ein pneumatischer oder hydraulischer Druck ausgesteuert werden kann.

Ferner weist die Anhängefahrzeugbremsanlage wenigstens eine elektrisch, pneumatisch oder hydraulisch mit dem Bremsbetätigungssteuermodul verbundene Bremsbetätigungseinrichtung auf, mittels der wenigstens ein dieser Bremsbetätigungseinrichtung zugeordnetes Rad eines die Anhängefahrzeugbremsanlage aufweisenden Anhängefahrzeugs in Erwiderung auf wenigstens ein bei der Steuereinrichtung eingehendes elektrisches Signal abgebremst werden kann.

Die Bremsbetätigungseinrichtung kann dabei bspw. ein Bremszylinder sein, der pneumatisch oder hydraulisch betätigt werden kann. Alternativ kann die Bremsbetätigungseinrichtung jedoch auch ein Aktuator einer elektrisch betätigbaren Bremse sein.

Vorteilhafterweise weist die Anhängerfahrzeugbremsanlage eine Schnittstelle zum Datenbus zwischen dem Zugfahrzeug und dem Anhängefahrzeug auf, so dass Signale oder Daten vom Zugfahrzeug durch den Datenbus, über die Schnittstelle zur Steuereinrichtung des Anhängefahrzeugs übertragen und dort sowohl für die Ansteuerung der Bremsbetätigungseinrichtung als auch für die Notbremserkennung bzw. die Ermittlung des Abbremsungswerts A und Signalisierung des jeweiligen Bremsvorgangs herangezogen werden.

Weitere vorteilhafte Ausführungsformen ergeben sich aus den Ansprüchen sowie aus den anhand der Zeichnung näher erläuterten Ausführungsbeispielen. In der Zeichnung zeigen:
- Fig. 1: einen pneumatischen und elektrischen Leitungsplan einer Bremsanlage mit elektronisch geregeltem Bremssystems (EBS) und
- Fig. 2: ein schematisiertes Flussdiagramm einer Notbremssignalfunktion eines elektronisch geregelten Bremssystems eines Anhängefahrzeugs gemäß Fig. 1.

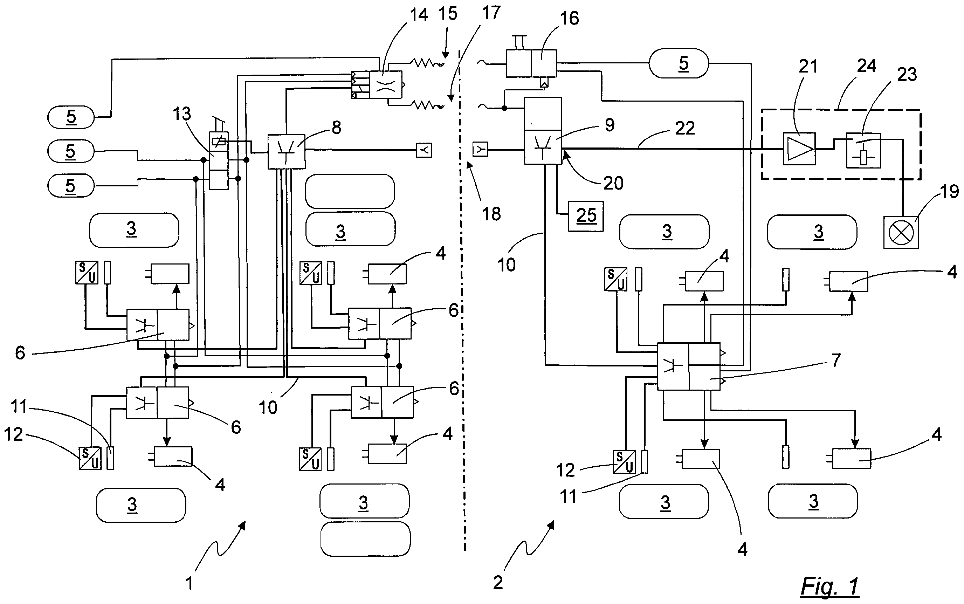

Fig. 1 zeigt einen pneumatischen und elektrischen Leitungsplan einer Bremsanlage mit einem elektronischen Bremssystem (EBS) in einem aus Zugfahrzeug 1 und Anhängefahrzeug 2 bestehenden Fahrzeugzug. Die elektrischen Leitungen des elektronischen Bremssystems sind mit dickeren Linien als die Druckmittelleitungen, insbesondere pneumatischen und/oder hydraulischen Leitungen, im Leitungsplan eingezeichnet.

Sämtlichen Rädern 3 sowohl des Zugfahrzeugs 1 als auch des Anhängefahrzeugs 2 sind jeweils ein druckmittelbetätigter, insbesondere pneumatisch oder hydraulisch betriebener Bremszylinder 4 als Bremsbetätigungseinrichtung zugeordnet. Sowohl im Zugfahrzeug 1 als auch im Anhängefahrzeug 2 sind zur Versorgung der Bremszylinder 4 Druckmittelbehälter 5, insbesondere Druckluftbehälter, vorgesehen.

Die Druckmittelbetätigung, insbesondere pneumatische oder hydraulische Betätigung, der Bremszylinder 4 erfolgt durch Druckregelmodule 6, 7, welche jeweils mit einer Steuereinrichtung bzw. einem Steuergerät 8, 9 signalübertragend über einen Brems-CAN-Bus 10 (CAN = Controller Area Network) verbunden sind. Im Zugfahrzeug 1 sind den Rädern 3 jeweils 1-Kanal-Druckregelmodule 6 zugeordnet. Im Bremssystem des Anhängefahrzeugs 2 ist ein Bremsbetätigungssteuermodul bzw. 2-Kanal-Druckregelmodul 7 vorgesehen, welches die Bremszylinder 4 aller Räder 3 versorgt. Es können aber auch für das Anhängefahrzeug 2 jedem Rad 3 rad- oder achsweise separate Druckregelmodule zugeordnet werden.

An die druckmittelbetätigbare, insbesondere pneumatische und/oder hydraulische, Bremsanlage ist ein Betriebsbremsventil 13 als Signalgeber angeschlossen, dessen Fahrpedal vom Fahrer des Zugfahrzeugs betätigbar ist. Bei Bewegung des Fahrpedals wird ein Signal erzeugt, welches einen Bremswunsch repräsentiert und der Steuereinheit 8 des Zugfahrzeugs 1 eingegeben wird. Eine Anbindung der pneumatischen Einrichtungen des Anhängefahrzeugs 2 an das Zugfahrzeug 1 erfolgt über ein Anhänger-Steuerventil 14, welches zum einen über einen Vorrats-Kupplungskopf 15 mit einem Anhängerbremsventil 16 und einem nachgeschalteten Druckbehälter 5 des Anhängefahrzeugs 2 verbunden ist. Zum anderen ist das Anhänger-Steuerventil 14 über einen BremsKupplungskopf 17 mit dem Steuergerät 9 der Bremsanlage im Anhängefahrzeug 2 verbunden.

Bei Betätigen des Betriebsbremsventils 13 berechnet das Steuergerät 8 im Zugfahrzeug den Bremswunsch des Fahrers, wobei gleichzeitig in den Druckregelmodulen 6 vorgesehene Backup-Stelleinrichtungen aktiviert und die pneumatischen Steuerdrücke abgesperrt werden. Das Steuergerät 8 berechnet abhängig vom Abbremswunsch und von zur Verfügung stehenden Betriebsgrößen wie Fahrzeugmasse und augenblicklicher Betriebslast den Bremssolldruck, welcher den Druckregelmodulen 6 über den jeweiligen Brems-CAN-Bus 10 vorgegeben wird.

Das Anhängefahrzeug 2 weist ein eigenes elektronisches Bremssystem auf, welches ein Steuergerät als zentrale Steuereinrichtung umfasst. Das Steuergerät 9 des Anhängefahrzeugs 2 ermittelt auf der Grundlage seiner Eingangssignale den Bremssolldruck für das angeschlossene Druckregelmodul 7. Dabei wird das Eingangssignal, welches einen Bremswunsch repräsentiert, vom Steuergerät 8 des Zugfahrzeugs vorgegeben. Die Steuergeräte 8, 9 des Zugfahrzeugs 1 bzw. des Anhängefahrzeugs 2 sind hierzu über einen Anhänger-CAN-Bus 18 nach ISO 11992 miteinander verbunden. Das Steuergerät 9 berechnet abhängig von dem erkannten Bremswunsch und/oder anderen zur Verfügung stehenden Betriebsgrößen den Bremssolldruck für die Bremszylinder 4, welcher dem Druckregelmodul 7 über den Brems-CAN-Bus 10 vorgegeben wird.

Bei Fahrzeugzügen, die über keine Datenschnittstelle ISO 11992 verfügen, kann dem Steuergerät 9 des Anhängefahrzeugs anstelle der Sollwertvorgabe vom Zugfahrzeug eine andere, verfügbare Größe zur Repräsentation des Bremswunschs vorgegeben werden. Die Sollwertvorgabe kann beispielsweise von einem Drucksensor des Anhänger-Steuerventils 14 erfolgen, der den Steuerdruck für das Anhängefahrzeug misst. Alternativ kann die Sollwertangabe auch von einem Anhängefahrzeug angeordneten Drucksensors erfolgen.

Eine Betriebsbremsbeleuchtung an der in Fahrtrichtung des Fahrzeugzugs hinteren Seite des Anhängefahrzeugs 2 ist über eine nicht dargestellte Steckverbindung nach ISO 12098 an die Beleuchtung des Zugfahrzeugs 1 gekoppelt, so dass ein Aufleuchten der Bremsleuchten des Zugfahrzeugs 1 zum Anhängefahrzeug 2 durchgeschaltet wird.

Das Steuergerät 9 im Anhängefahrzeug 2 ermittelt wenigstens einen dem jeweiligen Bremsvorgang zugeordneten Abbremsungswert und vergleicht diesen Abbremsungswert mit einem in einem Speicher des Steuergeräts 9 abgelegten Grenzwert. Dadurch führt das Steuergerät 9 insbesondere eine Notbremserkennung durch und veranlasst bei Feststellung einer Notbremssituation die Aktivierung einer Notbremssignalfunktion. Dabei wird eine Notbremsleuchte bzw. ein Notbremslicht 19 eingeschaltet, um an der Rückseite des Anhängefahrzeugs 2 die Notbremssituation dem nachfolgenden Verkehr durch Aufleuchten des Bremslichts 19 anzuzeigen. Hierzu ist ein Notbremssignalausgang 20 des Steuergeräts 9 mit einer Energiequelle, im vorliegenden Ausführungsbeispiel eine Ausgangsendstufe 21, über eine Steuerleitung 22 verbunden. Die Ausgangsendstufe 21 gibt bei Ansteuerung durch das Steuergerät 9 mit einem Notbremssignal ein entsprechendes elektrisches Signal für das Notbremslicht 19 aus.

Ein Blinken des Notbremslichtes 19 kann durch entsprechende Änderung der der Parametrierung des Steuergeräts 9 eingestellt werden.

Im gezeigten Ausführungsbeispiel ist zwischen der Ausgangsendstufe 21 und dem Notbremslicht 19 ein Relais 23 angeordnet, welches für ein Blinken des Notbremslichts 19 sorgt. Das Relais 23 kann ggf. über einen nicht dargestellten Datenbus oder über eine weitere Steuerleitung vom Steuergerät 9 geschaltet werden. Die Ausgangsendstufe 21 steuert über das Relais 23 das Notbremslicht 19 an. Die Ausgangsendstufe 21 und das Relais 23 bilden somit eine Notbremsschaltung 24 welche über das Steuergerät 9 an das Bremssystem angeschlossen ist und das Notbremslicht 19 bei Feststellen einer Notbremssituation einschaltet.

Das Notbremslicht 19 zur Anzeige der Notbremssituation ist als separates Bremslicht zusätzlich zur Betriebsbeleuchtung des Anhängefahrzeugs 2 an dessen Rückseite vorgesehen. Alternativ ist auch eine Ansteuerung der Betriebsbremsbeleuchtung des Anhängefahrzeugs 2 über die Notbremsschaltung 24 denkbar oder die Ansteuerung des Notbremslichts 19 in die Betriebsbremsbeleuchtung integriert. Insbesondere kann das Notbremslicht 19 ein Bremslicht sein, das von der regulären Betriebsbremsbeleuchtung bei jedem regulären Bremsvorgang über die nicht dargestellte Steckverbindung nach ISO 12 098 und eine elektrische Leitung von dieser Steckverbindung zum Relais 23 angesteuert wird, wobei die Ausgangsendstufe 21 entfallen kann bzw. im Zugfahrzeug angeordnet ist. Alternativ kann aber auch eine Steuerleitung vorgesehen sein, über welche die Betriebsbremsbeleuchtung die Ausgangsendstufe 21 ansteuert.

Das Relais 23 kann bei diesen alternativen Ausführungen über die in diesen Fällen die Steuerung 9 mit dem Relais 23 verbindende Steuerleitung 22 bzw. über eine andere nicht dargestellte Steuerleitung geschaltet werden. Die Steuerleitung 22 bzw. diese andere Steuerleitung ist bevorzugt als Busverbindung ausgebildet, über die Steuerdaten zum Schalten des Relais gesendet werden. Das Relais 23 unterbricht zyklisch oder solange eine Notbremssituation vorliegt, die Ansteuerung des Notbremslichts 19 durch die Betriebsbremsbeleuchtung. Eine Ansteuerung des Notbremslichts 19 bzw. einer regulären Bremsleuchte wird dabei unterbrochen oder auf die in Fig. 1 gezeigte Ansteuerung umgeschaltet. Ggf. sind dabei auch zwei Relais vorgesehen, wobei ein nicht dargestelltes Relais das Umschalten vornimmt und das Relais 23 für ein Blinken sorgt.

Zur Erkennung einer Notbremssituation wertet das Steuergerät die internen zur Verfügung stehenden Betriebsparameter des Fahrzeugs aus. Dabei werden neben einem Eingangssignal, welches einen Bremswunsch repräsentiert und über den CAN-Bus 18 vorliegt, die Geschwindigkeit des Anhängefahrzeugs und/oder die tatsächliche bzw. gewünschte Verzögerung des Fahrzeugs herangezogen. Bei Erreichen vorgegebener Grenzwerte stellt die Steuereinheit 9 eine Notbremssituation fest und aktiviert die Notbremssignalfunktion.

Das Bremslicht 19 zur Anzeige der Notbremssituation ist als adaptives Bremslicht 19 ausgebildet und wird auf der Grundlage der Auswertung der berücksichtigten Größen von dem Bremssystem adaptiv angesteuert. Dabei sind entsprechend der Bremsstärke bzw. Bremsverzögerung unterschiedliche Signale im Steuergerät 9 programmiert.

Das Steuergerät 9 weist Mittel zum Vergleich von Größen mit Vergleichsgrößen bzw. wenigstens einem Grenzwert auf. Diese zum Vergleich heranzuziehenden Größen können eine oder mehrere Größen umfassen, welche zur Ermittlung des Bremssolldrucks im Bremssystem berücksichtigt werden. Heranzuziehende Größen für die Notbremserkennung und die im Steuergerät implementierte Notbremssignalfunktion sind insbesondere die Geschwindigkeit des Anhängefahrzeugs 2, des Zugfahrzeugs 1 oder des Fahrzeugzugs und/oder die tatsächliche oder gewünschte Verzögerung des Anhängefahrzeugs 2, des Zugfahrzeugs 1 oder des Fahrzeugzugs. Diese Größen werden zumindest zum Teil zur Ermittlung des Solldrucks für das Bremssystem über den CAN-Bus 18 vom Zugfahrzeug 1 bezogen und/oder aus den Messwerten der Messsensoren am Anhängefahrzeug gewonnen, bspw. der Drehzahlsensoren 11.

Weitere Größen, die für die Notbremssignalfunktion herangezogen werden können, können aus Eingriffen durch andere Funktionen des Steuergeräts, wie bspw. Antiblockiersysteme (ABS), Schlupfregelungen (ASR) oder elektronische Stabilitätsprogramme (ESP) gewonnen werden. Auch die Haftreibung der Fahrbahn, die Messwerte der Bremsverschleißmesser 12 oder auch die Last des Fahrzeugs oder der Beladungszustand können im Steuergerät zur Bestimmung einer Notbremssituation und Aktivierung der Notbremssignalfunktion ausgewertet werden. Ferner können Fahrzeugdaten, wie Radgeschwindigkeit, Ladungsdaten und/oder über einen, insbesondere in das Steuergerät 9 integrierten, Sensor ermittelte Daten bzw. Messwerte einer Querbeschleunigung, die für eine Kippstabilitätseinrichtung bzw. einen Roll-Stability-Supprt (RSS) verwendet werden, als Größen für die Notbremserkennung herangezogen werden.

Um bei der Notbremserkennung die herangezogenen Betriebsgrößen mit vorgegebenen Grenzwerten zu vergleichen und bei Überschreiten der vorgegeben Grenzwerte die Notbremssignalfunktion zu aktiveren, sind in einem Speicher 25 des Steuergeräts 9 Grenzwerte für die zu berücksichtigenden Größen abgelegt.

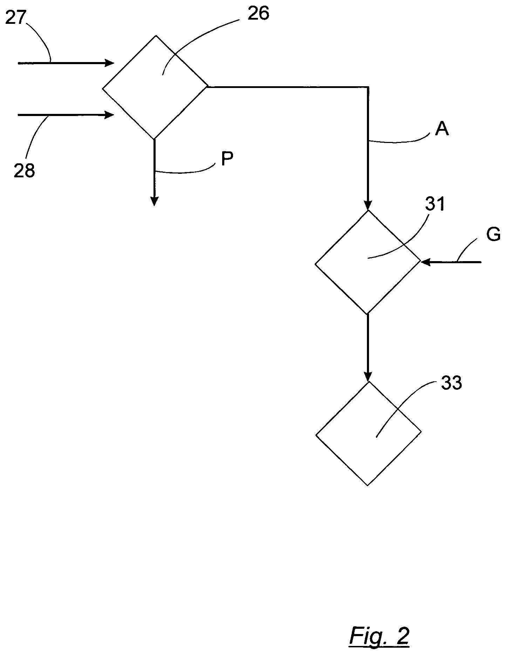

Fig. 2 zeigt in einem schematischen Flussschaubild die Arbeitsweise des Steuergeräts mit der darin implementierten Notbremssignalfunktion. Ein Schritt 26 dient der Erfassung von Eingangswerten aus empfangenen Signalen oder Daten und deren Verarbeitung, wobei ein Bremssolldruck 8 und wenigstens ein Abbremsungswert A ermittelt wird. Ein derartiges empfangenes Signal ist das Eingangssignal 27, welches den Bremswunsch bzw. eine Soll-Verzögerung repräsentiert. Das Eingangssignal 27 wird dem Steuergerät im Ausführungsbeispiel nach Fig. 1 vom Steuergerät 8 des Zugfahrzeugs vorgegeben. Zum anderen werden Betriebsparameter 28, insbesondere von den Messwertgebern des Anhängefahrzeugs, erfasst, und der Steuereinheit in Signalen oder Daten zugeführt.

Mehrere dieser erfassten Eingangswerte oder alle erfassten Eingangswerte und/oder aus einigen oder allen dieser Eingangswerte ermittelte Werte werden ausgewertet und der Bestimmung des Bremssolldrucks P für das Anhängefahrzeug oder der Bestimmung einer anderen Größe, nach der die Bremsen am Anhängefahrzeug betätigt werden, zugrunde gelegt. Derartige Eingangssignale, die zur Ermittlung des Bremssolldrucks P herangezogen werden, können beispielsweise eine Fahrzeugverzögerung bzw. eine ermittelte Ist-Verzögerung des Anhängefahrzeugs, Zugfahrzeugs oder Fahrzeugzugs und/oder die Geschwindigkeit des Anhängefahrzeugs sein.

Für die Verwirklichung der erfindungsgemäßen Notbremssignalfunktion wird wenigstens eine Größe, die eine der Eingangssignale 27 oder 28 oder eine aus wenigstens einer dieser Größen 27, 28 ermittelte Größe ist, zur Ermittlung des wenigstens einen Abbremsungswerts A oder als Abbremsungswert A herangezogen. Dieser Abbremsungswert A wird in einem Vergleichsschritt 31 mit wenigstens einem vorgegebenen Grenzwert G verglichen. Erreicht oder überschreitet der Abbremsungswert bzw. eine der Betriebsgrößen 29, die für die Notbremssignalfunktion herangezogen werden, einen für ihn bzw. sie vorgesehenen Grenzwert G, so wird die Notbremssignalfunktion 33 aktiviert. Dabei können für jeden herangezogenen Abbremsungswert A mehrere Grenzwerte G vorgesehen sein. Jedem der Grenzwerte G ist dabei ein entsprechendes Notbremssignal vorgegeben, so dass dem nachfolgenden Verkehr über das Notbremslicht 19 (Fig. 1) die Stärke der Notbremsung des Anhängefahrzeugs 2 angezeigt werden kann.

Nachdem bisher eine Ansteuerung eines adaptiven Bremslichts am Anhängefahrzeug durch das elektronische Bremssystem von Zugfahrzeugen nicht möglich war, da die genormten und insoweit verbindlichen Steckverbindungen zwischen Zugfahrzeug 1 und Anhängefahrzeug 2 eine solche Übertragung nicht zuließen, ist nunmehr durch die Steuerung eines adaptiven Bremslichts 19 durch das elektronische Bremssystem des Anhängefahrzeugs 2 eine Anzeige der Notbremssituation für den nachfolgenden Verkehr möglich.

Sämtliche in der vorstehenden Beschreibung und in den Ansprüchen genannten Merkmale sind sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Signalisieren eines Bremsvorgangs an einem Anhängefahrzeug (2) mit einer am Anhängefahrzeug (2) angeordneten Steuereinrichtung (9), wobei die Steuereinrichtung (9) wenigstens einen dem Bremsvorgang zugeordneten Abbremsungswert (A) ermittelt und wobei die Steuereinrichtung (9) wenigstens eine am Anhängefahrzeug (2) angeordnete Bremsleuchte (19) in Abhängigkeit von diesem Abbremsungswert (A) derart ansteuert, dass mittels der Bremsleuchte (19) bzw. der Bremsleuchten (19) der Bremsvorgang signalisiert wird, wobei diese Signalisierung am Anhängefahrzeug (2) in Abhängigkeit von diesem Abbremsungswert (A) unterschiedlich gegenüber einer Signalisierung im Falle wenigstens eines anderen von dieser Steuereinrichtung (9) bei einem Bremsvorgang ermittelbaren Abbremsungswertes (A) erfolgt,
**dadurch gekennzeichnet, dass**
die Steuereinrichtung (9) eine Steuerzentrale eines elektronischen Bremssystems am Anhängefahrzeug (2) ist, wobei das elektronische Bremssystem derart ausgebildet ist, um das Anhängefahrzeug (2) elektronisch gesteuert oder geregelt abzubremsen,
Signale oder Daten (27), welche von dem elektronischen Bremssystem des Anhängefahrzeug (2) für Steuerfunktionen und/oder Regelfunktionen des elektronischen Bremssystems des Anhängefahrzeug (2) genutzt werden, zum Ansteuern der Bremsleuchte (19) bzw. der Bremsleuchten (19) von der Steuereinrichtung (9) genutzt werden und
dieses Ansteuern der Bremsleuchte (19) bzw. der Bremsleuchten (19) zum Signalisieren des Bremsvorgangs mittels der Steuereinrichtung (9) in Abhängigkeit des Abbremsungswertes (A) am Anhängefahrzeug (2) erfolgt.

2. Verfahren nach Anspruch 1,
**dadurch gekennzeichnet, dass**
die Steuereinrichtung (9) zum Ermitteln des Abbremsungswertes (A) Signale oder Daten (27) empfängt, die von einem das Anhängefahrzeug (2) ziehenden Zugfahrzeug (1) über einen Datenbus (18) an das Anhängefahrzeug (2) übertragen werden, und
- die Bremsleuchte (19) über einen Datenbus ansteuert und/oder
- eine Ausgangsendstufe (21) schaltet, welche die Bremsleuchte (19) ansteuert und/oder
- die Bremsleuchte (19) über eine Lichtverkabelung ansteuert, über welche diese Bremsleuchte (19) auch vom Zugfahrzeug (1) angesteuert wird.

3. Verfahren nach Anspruch 1 oder 2,
**dadurch gekennzeichnet, dass**
die Steuereinrichtung (9) zum Ermitteln des Abbremsungswertes (A) eine oder mehrere der folgenden Größen heranzieht:
- wenigstens eine Ist-Geschwindigkeit;
- wenigstens eine Ist-Verzögerung;
- wenigstens eine Soll-Verzögerung (27);
- wenigstens ein Bremsanforderungssignal;
- wenigstens eine am Anhängefahrzeug oder Zugfahrzeug oder Fahrzeugzug sensierte Größe (29);
- wenigstens eine Information über einen automatischen Bremseingriff durch das Anhängefahrzeug.

4. Verfahren nach einem der vorherigen Ansprüche,
**dadurch gekennzeichnet, dass**
die Steuereinrichtung (9) die Bremsleuchte (19) adaptiv gemäß dem jeweiligen Abbremsungswert (A) ansteuert,
wobei die Steuereinrichtung (9) diesen Abbremsungswert (A) mit einem Grenzwert (G) vergleicht und in Erwiderung auf ein festgestelltes Erreichen, Überschreiten oder Unterschreiten des Grenzwertes (G) den Bremsvorgang als Notbremsung erkennt,
wobei der Bremsvorgang gegenüber einem anderen bei einem Bremsvorgang ermittelbaren Abbremsungswert (A) durch eine oder mehrere der folgenden Funktionen signalisiert wird:
- helleres Leuchten der Bremsleuchte (19);
- Ansteuern und Leuchten wenigstens einer zusätzlichen Notbremsleuchte (19) als Bremsleuchte;
- zyklisches Leuchten der Bremsleuchte (19), wobei die Bremsleuchte (19) in Erwiderung auf ihre Ansteuerung durch die Steuereinrichtung (9) selbsttätig ein Leuchtmittel der Bremsleuchte (19) alternierend ein- und ausschaltet;
- zyklisches Ansteuern der Bremsleuchte (19), wobei die Steuereinrichtung ein Relais (23) schaltet, das eine Ansteuerung der Bremsleuchte (19) durch das Zugfahrzeug (1) für eine endliche Zeitdauer unterbricht oder auf eine andere Ansteuerung umschaltet.

5. Verfahren nach einem der vorherigen Ansprüche,
**dadurch gekennzeichnet, dass**
in Erwiderung auf einen automatischen Bremseingriff am Anhängefahrzeug (2) durch ein einer seitlichen Kippneigung des Anhängefahrzeugs (2) entgegenwirkendes Stabilitätssystem, insbesondere durch einen Roll Stability Support (RSS), die Bremsleuchte (19) bzw. Notbremsleuchte am Anhängefahrzeug (2) aufgrund des ermittelten Abbremsungswertes und ihrer davon abhängigen Ansteuerung durch die Steuereinrichtung (9) eine Notbremsung signalisiert.

6. Steuereinrichtung für ein Anhängefahrzeug mit Abbremsungswertermittlungsmittel, mittels denen wenigstens ein Abbremsungswert (A), der einem Bremsvorgang zugeordnet ist, ermittelbar ist, und mit Bremsleuchtenansteuerungsmittel, mittels denen wenigstens eine Bremsleuchte (19) des Anhängefahrzeugs (2) in Abhängigkeit von diesem Abbremsungswert (A) derart ansteuerbar ist, dass mittels der Bremsleuchte (19) bzw. der Bremsleuchten (19) ein jeweiliger Bremsvorgang signalisiert wird, wobei diese Signalisierung am Anhängefahrzeug (2) in Abhängigkeit von diesem Abbremsungswert (A) unterschiedlich gegenüber einer Signalisierung im Falle wenigstens eines anderen von dieser Steuereinrichtung (9) bei einem Bremsvorgang ermittelbaren Abbremsungswertes (A) erfolgt, wobei die Steuereinrichtung (9) zur Durchführung des Verfahrens nach einem der Ansprüche 1 bis 5 ausgelegt ist, **gekennzeichnet durch**
eine Ausgestaltung der Steuereinrichtung (9) als eine Steuerzentrale eines elektronischen Bremssystems am Anhängefahrzeug (2), wobei das elektronische Bremssystem derart ausgebildet ist, um das Anhängefahrzeug (2) elektronisch gesteuert oder geregelt abzubremsen,
eine weitere Ausgestaltung der Steuereinrichtung (9) derart, um zum Ansteuern der Bremsleuchte (19) bzw. der Bremsleuchten (19) Signale oder Daten (27) zu nutzen, die von dem elektronischen Bremssystem des Anhängefahrzeug (2) für Steuerfunktionen und/oder Regelfunktionen des elektronischen Bremssystems des Anhängefahrzeug (2) genutzt werden und eine weitere Ausgestaltung der Steuereinrichtung (9) derart, um zum Signalisieren des Bremsvorgangs am Anhängefahrzeug (2) die Bremsleuchte (19) bzw. die Bremsleuchten (19) in Abhängigkeit des Abbremsungswertes (A) anzusteuern.

7. Steuereinrichtung nach Anspruch 6,
**dadurch gekennzeichnet, dass**
die Steuereinrichtung
- Empfangsmittel aufweist, mittels denen von einem das Anhängefahrzeug ziehenden Zugfahrzeug über einen Datenbus an dieses Anhängefahrzeug übertragende Daten oder Signale zum Ermitteln des Abbremsungswertes empfangbar sind, und
- die Bremsleuchtenansteuerungsmittel derart ausgebildet sind, dass die Bremsleuchte (19) über den Datenbus ansteuerbar ist und/oder
- eine Ausgangsendstufe (21) schaltbar ist, mittels der die Bremsleuchte (19) ansteuerbar ist, und/oder
- die Bremsleuchte über eine Lichtverkabelung ansteuerbar ist, über welche diese Bremsleuchte auch von einem das Anhängefahrzeug (2) ziehenden Zugfahrzeug (1) ansteuerbar ist.

8. Steuereinrichtung nach Anspruch 6 oder 7,
**gekennzeichnet durch**
eine Ausbildung derart, dass von der Steuereinrichtung eine oder mehrere der folgenden Größen zum Ermitteln des Abbremsungswertes heranziehbar sind, insbesondere herangezogen werden:
- wenigstens eine Ist-Geschwindigkeit;
- wenigstens eine Ist-Verzögerung;
- wenigstens eine Soll-Verzögerung (27);
- wenigstens ein Bremsanforderungssignal;
- wenigstens eine am Anhängefahrzeug oder Zugfahrzeug oder Fahrzeugzug sensierte Größe (28);
- wenigstens eine Information über einen automatischen Bremseingriff durch das Anhängefahrzeug.

9. Steuereinrichtung nach einem der Ansprüche 6 bis 8,
**dadurch gekennzeichnet, dass**
- die Steuereinrichtung (9) derart ausgebildet, dass die Bremsleuchte (19) mittels der Steuereinrichtung (9) adaptiv gemäß dem jeweiligen Abbremsungswert (A) ansteuerbar ist,
- die Steuereinrichtung (9) Notbremserkennungsmittel aufweist, mittels denen der Abbremsungswert (A) mit einem Grenzwert (G) vergleichbar ist und in Erwiderung auf ein festgestelltes Erreichen, Überschreiten oder Unterschreiten des Grenzwertes (G) der Bremsvorgang als Notbremsung erkennbar ist,
- die Lichtanlagenansteuerungsmittel derart ausgebildet sind, dass der Bremsvorgang gegenüber einem anderen bei einem Bremsvorgang ermittelbaren Abbremsungswert (A) durch eine oder mehrere der folgenden Funktionen signalisierbar ist:
- helleres Leuchten der Bremsleuchte (19);
- Ansteuern und Leuchten wenigstens einer zusätzlichen Notbremsleuchte (19) als Bremsleuchte;
- zyklisches Leuchten der Bremsleuchte (19), wobei die Bremsleuchte (19) in Erwiderung auf ihre Ansteuerung durch die Steuereinrichtung (9) selbsttätig ein Leuchtmittel der Bremsleuchte (19) alternierend ein- und ausschaltet;
- zyklisches Ansteuern der Bremsleuchte (19), wobei mittels der Steuereinrichtung (9) ein Relais (23) derart schaltbar ist, dass mittels des Relais ein Ansteuern der Bremsleuchte (19) durch das Zugfahrzeug (1) für eine endliche Zeitdauer unterbrechbar oder auf eine andere Ansteuerung umschaltbar ist.

10. Steuereinrichtung nach einem der Ansprüche 6 bis 9,
**gekennzeichnet durch**
eine Ausbildung der Steuereinrichtung (9) derart, dass in Erwiderung auf einen automatischen Bremseingriff am Anhängefahrzeug (2) **durch** ein einer seitlichen Kippneigung des Anhängefahrzeugs (2) entgegenwirkendes Stabilitätssystem, insbesondere **durch** einen Roll Stability Support (RSS), ein Abbremsungswert ermittelt und in dessen Abhängigkeit die Bremsleuchte (19) bzw. Notbremsleuchte am Anhängefahrzeug (2) derart angesteuert wird, dass diese Bremsleuchte (19) bzw. Notbremsleuchte in Erwiderung auf diese Ansteuerung eine Notbremsung signalisiert.

11. Lichtanlage zum Signalisieren eines Bremsvorganges an einem die Lichtanlage aufweisenden Anhängefahrzeug (2) mit wenigstens einer Bremsleuchte (19) und mit einer Steuereinrichtung (9) nach einem der Ansprüche 6 bis 10, mittels der diese Bremsleuchte (19) ansteuerbar ist.

12. Lichtanlage nach Anspruch 11,
**gekennzeichnet durch**
- einen Datenbus (18), mittels dem Signale oder Daten von einem das Anhängerfahrzeug (2) ziehenden Zugfahrzeug (1) an dieses Anhängefahrzeug (2) übertragbar sind,
- eine Ausgangsendstufe, mittels der die Bremsleuchte (19) ansteuerbar ist, und
- eine Lichtverkabelung, über welche die Bremsleuchte (19) sowohl vom Zugfahrzeug (1) als auch von der Steuereinrichtung (9) aus ansteuerbar ist.

13. Anhängefahrzeugbremsanlage mit einem elektronischen Bremssystem (EBS), mit einer Steuereinrichtung (9) am Anhängefahrzeug (2) nach einem der Ansprüche 6 bis 10, mit wenigstens einem signalübertragend mit der Steuereinrichtung (9) am Anhängefahrzeug (2) verbundenen Bremsbetätigungssteuermodul (7) und mit wenigstens einer elektrisch, pneumatisch oder hydraulisch mit dem Bremsbetätigungssteuermodul (7) verbundenen Bremsbetätigungseinrichtung (4), mittels der wenigstens ein dieser Bremsbetätigungseinrichtung (4) zugeordnetes Rad (3) eines die Anhängerfahrzeugbremsanlage aufweisenden Anhängefahrzeugs (2) in Erwiderung auf wenigstens ein bei der Steuereinrichtung (9) am Anhängefahrzeug (2) eingehendes elektrisches Signal oder bei der Steuereinrichtung (9) am Anhängefahrzeug (2) eingehende Daten abbremsbar ist, wobei die Steuereinrichtung (9) am Anhängefahrzeug (2) eine Schnittstelle zu einem Datenbus (18) aufweist, durch den die von einem das Anhängefahrzeug (2) ziehenden Zugfahrzeug (1) gesendeten Signale oder Daten empfangbar sind.

14. Anhängefahrzeug mit einer Steuereinrichtung (9) nach einem der Ansprüche 6 bis 10 und/oder mit einer Lichtanlage nach Anspruch 11 oder 12 und/oder mit einer Anhängefahrzeugbremsanlage nach Anspruch 13 und/oder mit Einrichtungen, mittels denen das Verfahren nach einem der Ansprüche 1 bis 5 durchführbar ist.

## Claims

1. Method for signaling a braking process at a trailer vehicle (2) having a control device (9) which is arranged on the trailer vehicle (2), wherein the control device (9) determines at least one braking value (A) which is assigned to the braking process, and wherein the control device (9) actuates at least one brake light (19), arranged on the trailer vehicle (2), as a function of this braking value (A) in such a way that by means of the brake light (19) or the brake lights (19) the braking process is signaled, wherein this signaling at the trailer vehicle (2) depending on this braking value (A) occurs differently compared to a signaling operation in the case of at least one other braking value (A) which can be determined by this control device (9) during a braking process,
**characterized in that**
the control device (9) is a control centre of an electronic brake system on the trailer vehicle (2), wherein the electronic brake system is designed to brake the trailer vehicle (2) under electronic open-loop or closed-loop control, signals or data (27) which are used by the electronic brake system of the trailer vehicle (2) for open-loop and/or closed-loop control functions of the electronic brake system of the trailer vehicle (2), for the actuation of the brake light (19) or of the brake lights (19) by the control device (9), and this actuation of the brake light (19) or of the brake lights (19) for signaling the brake process is carried out by means of the control device (9) as a function of the braking value (A) at the trailer vehicle (2).

2. Method according to Claim 1,
**characterized in that**
the control device (9) in order to determine the braking value (A) receives signals or data (27) which are transmitted from a towing vehicle (1) towing the trailer vehicle (2) to the trailer vehicle (2) via a databus (18), and
- actuates the brake light (19) via a databus and/or
- switches an output stage (21) which actuates the brake light (19), and/or
- actuates the brake light (19) via optical cabling via which this brake light (19) is also actuated by the towing vehicle (1).

3. Method according to Claim 1 or 2,
**characterized in that**
the control device (9) uses one or more of the following variables to determine the braking value (A) :
- at least one actual speed;
- at least one actual deceleration;
- at least one setpoint deceleration (27);
- at least one braking request signal;
- at least one variable (29) which is sensed at the trailer vehicle or towing vehicle or vehicle train; and
- at least one information item relating to an automatic braking intervention by the trailer vehicle.

4. Method according to one of the preceding claims, **characterized in that**
the control device (9) actuates the brake light (19) adaptively in accordance with the respective braking value (A),
wherein the control device (9) compares this braking value (A) with a limiting value (G) and detects the braking process as an emergency braking operation in response to it being detected that the limiting value (G) is reached, exceeded or undershot,
wherein the braking process is signaled compared to another braking value (A) which can be determined during a braking process by one or more of the following functions:
- lighting up the brake light (19) more brightly;
- actuating and lighting up at least one additional emergency brake light (19) as a brake light;
- cyclically lighting up the brake light (19), wherein the brake light (19) automatically switches a lighting means of the brake light (19) on and off in an alternating fashion in response to its actuation by the control device (9) ;
- cyclically actuating the brake light (19), wherein the control device switches a relay (23) which interrupts actuation of the brake light (19) by the towing vehicle (1) for a finite time period or switches over to another actuation operation.

5. Method according to one of the preceding claims,
**characterized in that**
in response to an automatic braking intervention at the trailer vehicle (2) by a stability system, in particular by a roll stability support (RSS), which counteracts a tendency of the trailer vehicle (2) to tilt laterally, the brake light (19) or emergency brake light at the trailer vehicle (2) signals an emergency braking operation on the basis of the determined braking value and its actuation as a function thereof or the control device (9).

6. Control device for a trailer vehicle having braking value determining means by means of which at least one braking value (A), which is assigned to a braking process, can be determined, and having brake light actuation means by means of which at least one brake light (19) of the trailer vehicle (2) can be actuated as a function of this braking value (A) in such a way that by means of the brake light (19) or the brake lights (19) a respective braking process is signaled, wherein this signaling at the trailer vehicle (Z) depending on this braking value (A) occurs differently compared to a signaling operation in the case of at least one other braking value (A) which can be determined by this control device (9) during a braking process, wherein the control device (9) is configured to carry out the method according to one of Claims 1 to 5,
**characterized by**
a configuration of the control device (9) as a control centre of an electronic brake system on the trailer vehicle (2), wherein the electronic brake system is designed to brake the trailer vehicle (2) under electronic open-loop or closed-loop control,
a further configuration of the control device (9) is designed to use for the actuation of the brake light (19) or the brake lights (19) signals or data (27) which are used by the electronic brake system of the trailer vehicle (2) for open-loop and/or closed-loop control functions of the electronic brake system of the trailer vehicle (2) and a further configuration of the control device (9) is designed to actuate the brake light (19) or the brake lights (19) as a function of the braking value (A) in order to signal the braking process at the trailer vehicle (2).

7. Control device according to Claim 6,
**characterized in that**
the control device
- has receiver means by means of which data or signals, which are transmitted from a towing vehicle towing the trailer vehicle to this trailer vehicle via a databus, can be received in order to determine the braking value, and
- the brake light actuation means are embodied in such a way that the brake light (19) can be actuated via the databus, and/or
- an output stage (21), by means of which the brake light (19) can be actuated, can be switched, and/or
- the brake light can be actuated via optical cabling via which this brake light can also be actuated by a towing vehicle (1) towing the trailer vehicle (2).

8. Control device according to Claim 6 or 7,
**characterized by**
an embodiment such that the control device can use, in particular uses, one or more of the following variables to determine the braking value:
- at least one actual speed;
- at least one actual deceleration;
- at least one setpoint deceleration (27);
- at least one braking request signal;
- at least one variable (28) which is sensed at the trailer vehicle or towing vehicle or vehicle train; and
- at least one information item relating to an automatic braking intervention by the trailer vehicle.

9. Control device according to one of Claims 6 to 8,
**characterized in that**
- the control device (9) is embodied in such a way that the brake light (19) can be actuated adaptively by means of the control device (9) in accordance with the respective braking value (A),
- the control device (9) has emergency braking detection means by means of which the braking value (A) can be compared with a limiting value (G), and the braking process can be detected as an emergency braking operation in response to it being detected that the limiting value (G) is reached, exceeded or undershot,
- the light system actuation means are embodied in such a way that the braking process can be signaled compared to another braking value (A) which can be determined during a braking process by one or more of the following functions:
- lighting up the brake light (19) more brightly;
- actuating and lighting up at least one additional emergency brake light (19) as a brake light;
- cyclically lighting up the brake light (19), wherein the brake light (19) automatically switches a lighting means of the brake light (19) on and off in an alternating fashion in response to its actuation by the control device (9);
- cyclically actuating the brake light (19), wherein a relay (23) can be switched by means of the control device (9) in such a way that actuation of the brake light (19) by the towing vehicle (1) can be interrupted for a finite time period or can be switched over to another actuation operation by means of the relay.

10. Control device according to one of Claims 6 to 9,
**characterized by**
an embodiment of the control device (9) such that a braking value is determined in response to an automatic braking intervention at the trailer vehicle (2) by a stability system, in particular by a roll stability support (RSS), which counteracts a tendency of the trailer vehicle (2) to tilt laterally, and the brake light (19) or emergency brake light at the trailer vehicle (2) is actuated as a function of said braking value in such a way that this brake light (19) or emergency brake light signals an emergency braking operation in response to this actuation operation.

11. Light system for signaling a braking process at a trailer vehicle (2) having the light system and having at least one brake light (19) and having a control device (9) according to one of Claims 6 to 10, by means of which this brake light (19) can be actuated.

12. Light system according to Claim 11,
**characterized by**
- a databus (18) by means of which signals or data can be transmitted from a towing vehicle (1) towing the trailer vehicle (2) to said trailer vehicle (2),
- an output stage by means of which the brake light (19) can be actuated, and
- optical cabling via which the brake light (19) can be actuated both from the towing vehicle (1) and from the control device (9).

13. Trailer vehicle brake installation having an electronic brake system (EBS), having a control device (9) on the trailer vehicle (2) according to one of Claims 6 to 10, having at least one brake activation control module (7) which is connected in a signal-transmitting fashion to the control device (9) on the trailer vehicle (2) and having at least one brake activation device (4) which is connected electrically, pneumatically or hydraulically to the brake activation control module (7) and by means of which at least one wheel (3), assigned to this brake activation device (4), of a trailer vehicle (2) having the trailer vehicle brake installation can be braked in response to at least one electrical signal received at the control device (9) on the trailer vehicle (2) or data received at the control device (9) on the trailer vehicle (2), wherein the control device (9) on the trailer vehicle (2) has an interface with a databus (18) through which the signals or data transmitted by a towing vehicle (1) towing the trailer vehicle (2) can be received.

14. Trailer vehicle having a control device (9) according to one of Claims 6 to 10 and/or having a light system according to Claim 11 or 12 and/or having a trailer vehicle brake installation according to Claim 13 and/or having devices by means of which the method according to one of Claims 1 to 5 can be carried out.

## Revendications

1. Procédé pour la signalisation d'un processus de freinage à un véhicule remorqué (2) avec un dispositif de commande (9) installé sur le véhicule remorqué (2), dans lequel le dispositif de commande (9) détermine au moins une valeur de décélération (A) affectée à la phase de freinage, et dans lequel le dispositif de commande (9) actionne au moins un feu stop (19) installé sur le véhicule remorqué (2) en fonction de cette valeur de décélération (A) de telle manière que le processus de freinage est signalisé par le biais du feu stop (19) ou des feux stop (19), cette signalisation sur le véhicule remorqué (2) se faisant différemment en fonction de cette valeur de décélération (A) par rapport à une signalisation faite dans le cas d'au moins une autre valeur de décélération (A) pouvant être déterminée par ce dispositif de commande (9) durant un processus de freinage,
**caractérisé en ce que**
le dispositif de commande (9) est une centrale de commande d'un système de freinage électronique sur le véhicule remorqué (2), le système de freinage électronique étant configuré de façon à freiner le véhicule remorqué (2) de manière activée ou régulée électroniquement,
des signaux ou données (27) qui sont utilisés par le système de freinage électronique du véhicule remorqué (2) pour des fonctions de commande et/ou des fonctions de régulation du système de freinage électronique du véhicule remorqué (2), sont utilisés en vue de l'activation du feu stop (19) ou des feux stop (19) par le dispositif de commande (9),
et cette activation du feu stop (19) ou des feux stop (19) s'effectue en vue de la signalisation du processus de freinage par le biais du dispositif de commande (9) en fonction de la valeur de décélération (A) sur le véhicule remorqué (2).

2. Procédé selon la revendication 1,
**caractérisé en ce que**
le dispositif de commande (9) pour la détermination de la valeur de décélération (A) reçoit des signaux ou des données (27) qui sont transmis au véhicule remorqué (2) par un véhicule tracteur (1) remorquant le véhicule remorqué (2) par le biais d'un bus de données (18), et
- actionne le feu stop (19) par un bus de données et/ou
- commute un étage de sortie final (21) qui actionne le feu stop (19) et/ou
- actionne le feu stop (19) par le biais d'un câblage de lumière par lequel ce feu stop (19) est aussi actionné par le véhicule tracteur (1).

3. Procédé selon la revendication 1 ou 2,
**caractérisé en ce que**
le dispositif de commande (9) pour la détermination de la valeur de décélération (A) fait appel à une ou plusieurs des grandeurs suivantes :
- au moins une vitesse effective ;
- au moins une décélération effective ;
- au moins une décélération théorique (27) ;
- au moins un signal de demande de freinage ;
- au moins une grandeur détectée (29) sur le véhicule remorqué ou le véhicule tracteur ou le train routier ;
- au moins une information à propos d'un engagement de freinage automatique du véhicule remorqué.

4. Procédé selon l'une des revendications qui précèdent,
**caractérisé en ce que**
le dispositif de commande (9) actionne le feu stop (19) de façon adaptative en fonction de la valeur de décélération (A) respective,
le dispositif de commande (9) comparant cette valeur de décélération (A) à une valeur limite (G), et en réaction à la constatation que la valeur limite (G) est atteinte, dépassée ou n'est pas dépassée, reconnaissant le processus de freinage comme étant un freinage d'urgence,
le processus de freinage étant signalé par rapport à une autre valeur de décélération (A) pouvant être déterminée durant un processus de freinage par une ou plusieurs des fonctions suivantes:
- allumage plus lumineux du feu stop (19);
- activation et allumage d'au moins un feu stop d'urgence (19) supplémentaire en tant que feu stop;
- allumage cyclique du feu stop (19), le feu stop (19), en réaction à son activation par le dispositif de commande (9), allumant et éteignant alternativement de manière autonome une source de lumière du feu stop (19) ;
- activation cyclique du feu stop (19), le dispositif de commande commutant un relais (23) qui interrompt une activation du feu stop (19) par le véhicule tracteur (1) pendant un laps de temps limité ou se commutant sur une autre activation.

5. Procédé selon l'une des revendications qui précèdent,
**caractérisé en ce que**
en réaction à un engagement automatique du frein sur le véhicule remorqué (2) par un système de stabilité exerçant un effet contraire par une inclinaison de basculement latérale du véhicule remorqué (2), en particulier par un Roll Stability Support (RSS), le feu stop (19) ou le feu stop d'urgence sur le véhicule remorqué (2) signale un freinage d'urgence sur la base de la valeur de décélération déterminée et de son activation par le dispositif de commande (9), qui dépend de cette valeur.

6. Dispositif de commande pour un véhicule remorqué muni de moyens de détermination de la valeur de décélération qui permettent de déterminer au moins une valeur de décélération (A) qui est affectée à un processus de freinage, et muni de moyens de commande des feux stop qui permettent d'activer au moins un feu stop (19) du véhicule remorqué (2) en fonction de cette valeur de décélération (A), de telle façon que grâce au feu stop (19) ou aux feux stop (19), un processus de freinage respectif est signalé, cette signalisation sur le véhicule remorqué (2) s'effectuant en fonction de cette valeur de décélération (A) de façon différente qu'une signalisation qui est faite dans le cas d'au moins une autre valeur de décélération (A) pouvant être déterminée par ce dispositif de commande (9) durant un processus de freinage est détectée, le dispositif de commande (9) étant conçu pour la mise en oeuvre du procédé selon l'une des revendications 1 à 5,
**caractérisé par**
une configuration du dispositif de commande (9) en tant qu'une centrale de commande d'un système de freinage électronique sur le véhicule remorqué (2), le système de freinage électronique étant configuré de manière à freiner par une commande ou une régulation électronique le véhicule remorqué (2),
une autre configuration du dispositif de commande (9) de manière à utiliser des signaux ou des données (27) pour l'activation du feu stop (19) ou des feux stop (19), ces signaux ou données étant utilisés par le système de freinage électronique du véhicule remorqué (2) pour des fonctions de commande et/ou des fonctions de régulation du système de freinage électronique du véhicule remorqué (2), et
une autre configuration du dispositif de commande (9) de manière à activer le feu stop (19) ou les feux stop (19) en fonction de la valeur de décélération (A) en vue de la signalisation du processus de freinage sur le véhicule remorqué (2).

7. Dispositif de commande selon la revendication 6,
**caractérisé en ce que**
le dispositif de commande
- comporte des moyens de réception grâce auxquels des données ou des signaux pour la détermination de la valeur de décélération pouvant être transmis par le biais d'un bus de données un véhicule tracteur remorquant le véhicule remorqué sur ce véhicule remorqué peuvent être reçus et
- le moyen de commande des feux stop est configuré de manière à ce que le feu stop (19) peut être activé par le biais du bus de données, et/ou
- un étage de sortie final (21) peut être commuté, par lequel le feu stop (19) peut être actionné et/ou
- le feu stop peut être actionné par un câblage de lumière par lequel ce feu stop peut aussi être commandé par un véhicule tracteur (1) remorquant le véhicule remorqué (2).

8. Dispositif de commande selon la revendication 6 ou 7,
**caractérisé par** une configuration telle qu'on peut faire appel à une ou plusieurs des grandeurs suivantes pour la détermination de la valeur de décélération par le dispositif de commande, en particulier :
- au moins une vitesse effective ;
- au moins une décélération effective ;
- au moins une décélération théorique (27) ;
- au moins un signal de demande de freinage ;
- au moins une grandeur détectée (28) sur le véhicule remorqué ou le véhicule tracteur ou le train routier ;
- au moins une information à propos d'un engagement de freinage automatique du véhicule remorqué.

9. Dispositif de commande selon l'une des revendications 6 à 8,
**caractérisé en ce que**
- le dispositif de commande (9) est configuré de telle manière que le feu stop (19) peut être activé de façon adaptative par le dispositif de commande (9) en fonction de la valeur de décélération (A) respective,
- le dispositif de commande (9) comporte des dispositifs de détection du freinage d'urgence par le biais desquels la valeur de décélération (A) peut être comparée à une valeur limite (G), et en réaction au fait que la valeur limite (G) a été atteinte, dépassée ou n'a pas été dépassée, le processus de freinage peut être identifié comme étant un freinage d'urgence,
- les dispositifs d'activation du système d'éclairage sont configurés de telle manière que le processus de freinage par rapport à une autre valeur de décélération (A) pouvant être déterminée pendant un processus de freinage peut être signalé par une ou plusieurs des fonctions suivantes :
- allumage plus lumineux du feu stop (19);
- activation et allumage d'au moins un feu stop d'urgence (19) supplémentaire en tant que feu stop;
- allumage cyclique du feu stop (19), le feu stop (19), en réaction à son activation par le dispositif de commande (9), allumant et éteignant alternativement de manière autonome une source de lumière du feu stop (19) ;
- activation cyclique du feu stop (19), un relais (23) pouvant être commuté par le dispositif de commande (9) de manière à ce qu'une activation du feu stop (19) par le véhicule tracteur (1) peut être interrompue par le relais ou être commutée sur une autre activation pendant un laps de temps limité.

10. Dispositif de commande selon l'une des revendications 6 à 9,
**caractérisé par**
une configuration du dispositif de commande (9) telle qu'en réaction à un engagement automatique du frein sur le véhicule remorqué (2) par un système de stabilité exerçant un effet contraire à une inclinaison de basculement latérale du véhicule remorqué (2), en particulier par un Roll Stability Support (RSS), une valeur de décélération est déterminée, et en fonction de celle-ci, le feu stop (19) ou le feu stop d'urgence sur le véhicule remorqué (2) est actionné de façon à ce que ce feu stop (19) ou ce feu stop d'urgence signale un freinage d'urgence en réaction à cette activation.

11. Système d'éclairage pour la signalisation d'un processus de freinage à un véhicule remorqué (2) disposant du système d'éclairage avec au moins un feu stop (19) et un dispositif de commande (9) selon l'une des revendications 6 à 10, par lequel ce feu stop (19) peut être activé.

12. Système d'éclairage selon la revendication 11,
**caractérisé par**
- un bus de données (18) grâce auquel des signaux ou des données peuvent être transmis vers un véhicule remorqué (2) par un véhicule tracteur (1) remorquant ce véhicule remorqué (2),
- un étage de sortie final grâce auquel le feu stop (19) peut être actionné, et
- un câblage d'éclairage grâce auquel le feu stop (19) peut être actionné, aussi bien à partir du véhicule tracteur (1) qu'à partir du dispositif de commande (9).

13. Système de freinage du véhicule remorqué muni d'un système de freinage électronique (EBS), équipé d'un dispositif de commande (9) sur le véhicule remorqué (2) selon l'une des revendications 6 à 10, muni d'au moins un module de commande d'activation des freins (7) relié au dispositif de commande (9) sur le véhicule remorqué (2) en transmettant des signaux et muni d'au moins un dispositif d'activation des freins (4) électrique, pneumatique ou hydraulique comprenant le module de commande d'activation des freins (7), par le biais duquel au moins une roue (3), associée à ce dispositif d'activation des freins (4), d'un véhicule remorqué (2) comportant le système de freinage du véhicule remorqué, peut être freinée en réaction à au moins un signal électrique parvenant au dispositif de commande (9) sur le véhicule remorqué (2) ou à des données parvenant sur le dispositif de commande (9) sur le véhicule remorqué (2), le dispositif de commande (9) sur le véhicule remorqué (2) disposant d'une interface vers un bus de données (18) par lequel les signaux ou les données transmis par un véhicule tracteur (1) remorquant le véhicule remorqué (2) peuvent être reçus.

14. Véhicule remorqué muni d'un dispositif de commande (9) selon l'une des revendications 6 à 10 et/ou d'un système d'éclairage selon la revendication 11 ou 12, et/ou d'un système de freinage du véhicule remorqué selon la revendication 13 et/ou de dispositifs par le biais desquels le procédé selon l'une des revendications 1 à 5 peut être mis en oeuvre.
